# EUROPÄISCHE PATENTANMELDUNG

(11) **EP 1 447 281 A1**
(43) Veröffentlichungstag der Anmeldung: **18.08.2004**
(21) Anmeldenummer: 04000540.7
(22) Anmeldetag: 13.01.2004
(51) Int. Cl.: B60R 16/02, H04L 12/40

(54) **Modulares und skalierbares System von Elektronikkomponenten für Fahrzeuge**

(30) Priorität: 13.02.2003 DE 10306038; 05.08.2003 DE 10335812
(71) Anmelder: ESG Elektroniksystem-und Logistik-Gesellschaft mit beschränkter Haftung, D-81675 München (DE)
(72) Erfinder: Weiss, Karl-Heinz, Dr., 81827 München (DE)
(74) Vertreter: Körfer, Thomas

(57) **Zusammenfassung**

Ein modulares und skalierbares System (1) zur Ausführung von Unterhaltungs-, Telekommunikations-, Steuerungs- und Überwachungsfunktionen für Fahrzeuge besteht aus Standardelektronikbausteinen (6, 9, 10, 11, 12, 13, 14, 15, 16, 17, 18, 19, 21, 22, 23, 24, 25, 26, 27, 28, 29, 30, 31, 33, 35, 37, 39, 41, 47, 50, 53, 58, 61, 63, 71, 73, 77, 80, 90, 91, 92, 93, 94, 97) und anwendungsspezifischen Elektronikbausteinen (75, 96) zur Informationsverarbeitung und -speicherung sowie zur Datenkommunikation. Die Komfort-, Steuerungs- und Überwachungsfunktionen mit hohen Echtzeitanforderungen sind auf einer ersten Elektronikbaugruppe (2) und die Unterhaltungs-, Telekommunikations-, Steuerungs- und Überwachungsfunktionen mit geringeren Echtzeitanforderungen sind auf einer zweiten Elektronikbaugruppe (3) ausgeführt.

## Beschreibung

Die Erfindung betrifft ein modulares und skalierbares System von Elektronikkomponenten für Fahrzeuge mit integrierten Unterhaltungs-, Telekommunikations-, Steuerungsund Überwachungsfunktionen.

Heutige Fahrzeuge, insbesondere Automobile, weisen neben mechanischen, hydraulischen und pneumatischen Systemen im zunehmenden Maße elektronische Systemen auf. Die elektronischen Systeme wurden bisher schwerpunktmäßig für Steuerungs- und Überwachungsaufgaben von unterschiedlichsten Aggregaten und Geräten im Fahrzeug entwickelt. Neben der Steuerung, Überwachung und Diagnose des Antriebs (Motor-Steuerung, Motor-Management) und des Antriebsstranges (Getriebe, Kupplung) führen diese elektronische Systeme hauptsächlich Steuerungs- und Überwachungsaufgaben im Bereich der aktiven und passiven Sicherheit im Fahrzeug durch (z.B. Antiblockiersystem, Anti-Schlupf-Regelung, Airbag, Dämpfungs- und Stabilitätsregelung, Abstandsregelung, Wegfahrsperre, Türkontrollsystem). Derart hochkomplexe Steuerungs- und Überwachungsfunktionen ließen sich erst durch die Entwicklung der Mikroelektronik verwirklichen.

Neben diesen antriebsnahen und sicherheitsrelevanten Meß-, Steuer- und Regelungsaufgaben werden heute in Fahrzeugen verstärkt auch Komfortfunktionen durch Elektronikkomponenten verwirklicht. Hierbei handelt es sich einerseits um Funktionen zur Erhöhung der Behaglichkeit in der Fahrgastzelle (z.B. Klimaanlage, Audio- und Videosysteme), um die Automatisierung von Bedienfunktionen (z.B. elektronische Fensterheber, elektronische Scheibenwischer, automatisierte Sitzverstellung) und um Telekommunikationsfunktionen (z.B. Mobilfunk, Navigation).

Im Bereich der Unterhaltung - Infotainement - ist das klassische Autoradio längst durch einen RDS-Tuner mit CD-/DVD-Player ersetzt. Elektronikmodule für den TV-Empfang gewinnen zunehmend an Bedeutung im Fahrzeug. Im Bereich der Telekommunikation wird die Mobiltelefonie über das GSM-Netz mit Internetzugriff nach dem GPRS-Kommunikationsstandard durch entsprechende Empfangsmodule realisiert. Elektronische Navigationssysteme, die auf Basis des satellitengestützten globalen Ortungssystems (global position system = GPS) arbeiten, stellen hochkomplexe Elektroniksysteme im Fahrzeug dar. Analoge Anzeigen werden zunehmend durch hochauflösende Vollgrafikbildschirme ersetzt. Die Bedienung der einzelnen Aggregate und Geräte im Fahrzeug erfolgt nicht nur durch mechanische Tasten und Drehknöpfe, sondern wird zukünftig auch über elektronikunterstützte Spracheingabe verwirklicht.

Alle diese elektronischen Geräte sind über leistungsfähige Bussysteme, im Automobilbereich insbesondere den elektronischen CAN- und Firewire-Bus sowie den optoelektronischen MOST-Bus, miteinander vernetzt. Speichermedien wie Flash-Speicher, CD-ROM, DVD oder Festplatte bieten genügend Speicherkapazität für die speicherintensiven Anwendungen im Fahrzeug. Eine Bluetooth-Schnittstelle für drahtlose Kommunikation sowie eine Ethernet-Schnittstelle für Netzwerkanschluß bieten die Möglichkeit zum Anschluß eines mobilen Rechners an die Fahrzeugelektronik.

Die einzelnen elektronischen Geräte und Module sind bisher als autarke Systeme konzipiert und somit für ihre jeweilige Anwendung für sich allein voll funktionsfähig. Jede Elektronik-Einheit weist deshalb eine eigene Prozessor-Einheit, eigene Speichermodule und eigene Schnittstellenbausteine zur Peripherie und zu den Kommunikationsbussen auf. Neben proprietären Bausteinen handelt es sich dabei meistens um Standardbausteine. Ein Datenaustausch zwischen den einzelnen Elektronikgeräten und -modulen über Kommunikationsbusse ist möglich, aber auf Grund proprietärer Schnittstellenbausteine stark begrenzt (z.B. kein Zugriff eines Elektronikmoduls auf lokale Speicher eines anderen Elektronikmoduls). Auch die Nutzung von Hardware-Ressourcen auf benachbarten Elektronikmodulen durch Anwendungen, die auf einem bestimmten Elektronikmodul implementiert sind, sind auf Grund dieses Engpasses gar nicht (z.B. begrenzte Prozessorleistung) oder nur beschränkt möglich (z.B. Zugriff auf Binär- oder Analog- Eingänge einer benachbarten Elektronikbaugruppe).

Große Bedeutung gewinnt im Fahrzeug vor allem die kundenindividuelle Konfiguration von multimedialen Unterhaltungs- und Telekommunikationsfunktionen in elektronischen Systemen. Hierbei ist ein Elektroniksystem zu konfigurieren, das in seinem Umfang derart skalierbar ist, daß es jeweils nur die vom jeweiligen Kunden gewünschten Funktionen beinhaltet. Hierzu sind modulare Komponenten vorzuhalten, mit denen entsprechend einem Baukastensystem das Elektroniksystem im Fahrzeug kundenindividuell skaliert werden kann. Über eine einfache und kompakte Verbindungstechnik sind gemäß dem Kundenwunsch die entsprechenden Hardwaremodule inklusive der dazugehörigen Systemsoftware in das Elektroniksystem des Fahrzeugs zu integrieren. Auch ein nachträgliches Nachrüsten von Elektronikkomponenten sowie eine Aktualisierung von Hardund Systemsoftwareversionen (Updating) ist in heutigen Elektroniksystemen in Fahrzeugen vorgesehen.

In der DE 101 27 327 A1 wird ein KFZ-Netzwerk mit mehreren Busstationen vorgestellt, die jeweils aus einer Basisstation, in der Standard-Bausteine wie Mikroprozessor, Speicherbausteine und Netzwerkschnittstelle integriert sind, und aus mehreren über einen lokalen Bus verbundenen Erweiterungsmodulen besteht. In den einzelnen Erweiterungsmodulen sind jeweils die oben genannten multimedialen Unterhaltungs- und Telekommunikationsfunktionen realisiert.

Da eine beliebige Anzahl von Erweiterungsmodulen über den lokalen Bus in das Elektroniksystem integriert werden kann, ist die Forderung nach einem flexibel und modular skalierbaren Elektroniksystem erfüllt. Nachteilig an dieser Systemarchitektur ist aber die hohe Anzahl an anwendungsspezifischen Bausteinen (beispielsweise unterschiedlichste Signalprozessoren in den einzelnen Erweiterungsmodulen), die einen hohen Aufwand beim Design des Elektroniksystems bedeuten und einen Datenaustausch zwischen implementierten Funktionen des Elektroniksystems nicht unterstützen bzw. nur unter Zwischenschaltung aufwendiger Schnittstellen- bzw. Konvertierungsbausteine ermöglichen. Als weiterer Nachteil kommt hinzu, daß in jeder Basisstation identische Standardbausteine wie Mikroprozessoren, Speichermodule, Schnittstellenbausteine vorliegen, die von den auf der Basisstation laufenden Anwendungen bzw. Funktionen kapazitätsmäßig nicht zwingenderweise vollständig genutzt werden. Somit liegt eine gewisse unnötige Redundanz in der Auslegung des Systems vor, die mit einem unnötigen Verbrauch an Bauraum einhergeht.

In dem Elektroniksystem für Fahrzeuge der DE 101 23 842 A1 sind die Steuerungs- und Überwachungsfunktionen bereits in einer einzigen Zentralsteuereinheit und die Infotainement-Funktionen - Audioempfang, CD-/DVD-/MD-Player - bereits in einem Infotainment-Modul integriert, während die einzelnen Multimedia-Funktionen - Mobilfunk, Navigation, Internetanbindung usw. - in mehreren über einen Multimedia-Bus verbundenen Multimedia-Modulen verteilt sind. Die Skalierbarkeit des Elektroniksystems vom Einfach-System mit Grundausstattung bis zum High-End-Multimediasystem ist durch die flexible Einbindung unterschiedlichster Multimedia-Module in den Multimedia-Bus gegeben. Die funktionale Trennung der sicherheitssensiblen Steuerungs- und Überwachungsfunktionen einerseits und der weniger sicherheitsrelevanten Multimedia- und Infotainement-Funktionen andererseits in jeweils einem Zentralmodul und mehreren über jeweils einen Bus verbundenen Erweiterungskomponenten erhöht zwar die Sicherheit des Systems, führt aber zu einer ineffizienten Vorhaltung von Hardwaremodulen.

Der Erfindung liegt daher die Aufgabe zugrunde, ein modulares und skalierbares System für Fahrzeuge gemäß dem Oberbegriff von Anspruch 1 derart weiterzubilden, daß für alle möglichen kundenindividuellen Konfigurationen der multimedialen Unterhaltungs- und Telekommunikations-Funktionen sowie Steuerungs- und Überwachungsfunktionen bei Einhaltung der Echtzeitanforderungen der einzelnen Funktionen die einzelnen Elektronikkomponenten möglichst effizient ausgelastet sind.

Die Aufgabe der Erfindung wird durch ein modulares und skalierbares System von Elektronikkomponenten für Fahrzeuge mit den Merkmalen des Anspruches 1 gelöst.

Das modulare und skalierbare System wird im Hinblick auf einem minimale Vorhaltung von Elektronikkomponenten auf insgesamt zwei Elektronikbaugruppen reduziert. Um die einzelnen Elektronikkomponenten auf den beiden Elektronikbaugruppen möglichst optimal auszulasten, werden soweit wie möglich möglichst viele Standardbausteine - Mikroprozessoren, Speichermodule, Schnittstellebausteinen und dgl. - eingesetzt, die von einer möglichst großen Anzahl von implementierten Funktionen genutzt werden können. Die Integration von anwendungsspezifischen Spezialbausteinen wird entsprechend des maximal zu konfigurierenden Funktionsumfangs des Systems auf das nötigste Maß reduziert.

Da die entsprechend der gewünschten Konfiguration zu realisierenden Funktionen unterschiedliche Echtzeitanforderungen besitzen und eine unterschiedlich hohe Verarbeitungskomplexität - Algorithmik, Datenkomplexität - aufweisen, werden auf der ersten Elektronikbaugruppe auf einem sehr leistungsfähigen Mikroprozessor rechenintensive Funktionen mit hohen Echtzeitanforderungen und hoher Verarbeitungskomplexität bearbeitet, während auf dem Mikroprozessor der zweiten Elektronikbaugruppe weniger rechenintensive Funktionen mit geringeren Echtzeitanforderungen und geringerer Verarbeitungskomplexität berechnet werden. Somit ist gewährleistet, daß die einzelnen Funktionen entsprechend ihres Rechenleistungsbedarfes auf einer Elektronikbaugruppe mit einem Mikroprozessor implementiert sind, der eine adäquate Rechenleistung aufweist.

Vorteilhafte Ausgestaltungen der Erfindungen sind in den abhängigen Ansprüchen angegeben.

Das modulare und skalierbare System ist derart ausgelegt, daß die beiden Elektronikbaugruppen über den gemeinsamen Kommunikationsbus kontinuierlich das Betriebsverhalten der jeweils anderen Elektronikbaugruppe überwachen und bei Ausfall oder bei nicht vorschriftsgemäßem Betriebsverhalten der jeweiligen Elektronikbaugruppe zumindest die für den Fahrzeugbetrieb wichtigen Funktionen der jeweils anderen Elektronikbaugruppe übernehmen. Diese Redundanz des Systems ist bei der Systemauslegung - z.B. Bemessung der Prozessorleistung und der Speicherkapazität usw. - berücksichtigt.

Die Modularität und Skalierbarkeit des Systems wird in Abgrenzung zu den in den obengenannten Druckschriften vorgestellten Systemarchitekturen nicht durch Integration entsprechender Hardwaremodule realisiert, sondern durch softwaretechnische Konfiguration des Systems. Hierzu werden bei der Initialisierung des Systems mittels einer Konfigurationssoftware die programmierbaren anwendungsspezifischen Bausteine - beispielsweise programmierbare FPGAs oder CPLDs - hinsichtlich ihrer Hardwarefunktionalitäten konfiguriert und die Systemsoftware derjenigen festverdrahteten anwendungsspezifischen Bausteine aktiviert, die für die Implementierung der gewünschten Funktionen erforderlich sind.

Im Hinblick auf eine Offenheit des modularen und skalierbaren Systems werden Standardschnittstellen verwendet. Somit ist es möglich, einen Datenaustausch zu Elektronikkomponenten über Standard-Bussysteme aufzubauen, die sich im Fahrzeugbereich etabliert haben und noch etablieren werden (z. B. CAN--, Firewire- und MOST-Bus). Auch zu standardisierten Netzen (z. B. LAN, GSM, GPRS, GPS usw.) bestehen standardisierte Schnittstellen, um einen Datenverkehr mit Systemen, Geräten und Komponenten außerhalb des Fahrzeugs zu gewährleisten. Auch der Anschluß von Standard-Peripheriegeräten (z. B. Grafikbildschirm, Touch-Screen, Drucker, Fax, Maus, Joystick, Eingabetastatur, Mikrofon, Lautsprecher, Antenne usw.) wird über Standardperipherieschnittstellen ermöglicht.

Ein Ausführungsbeispiel der Erfindung ist in der Zeichnung dargestellt und wird nachfolgend näher beschrieben. Es zeigen:
- Fig. 1: ein Blockdiagramm des modularen und skalierbaren Systems,
- Fig. 2: ein Blockdiagramm der ersten Elektronikbaugruppe und
- Fig. 3: ein Blockdiagramm der zweiten Elektronikbaugruppe.

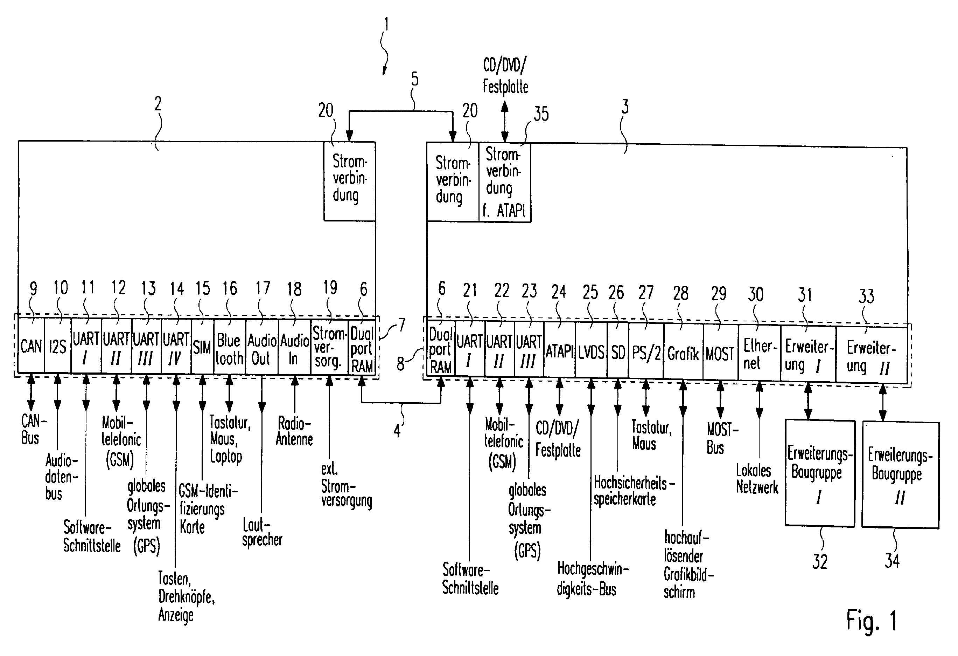

Das erfindungsgemäße modulare und skalierbare System wird mit seiner Ausführungsform nachfolgend unter Bezugnahme auf Fig. 1 bis 3 beschrieben.

Das modulare und skalierbare System 1 im Fahrzeug besteht gemäß Fig. 1 bis 3 aus der ersten Elektronikbaugruppe 2 und der zweiten Elektronikbaugruppe 3. Die erste Elektronikbaugruppe 2 ist mit der zweiten Elektronikbaugruppe 3 über eine digitale Datenverbindung 4 und eine analoge Stromverbindung 5 verbunden. Die digitale Datenverbindungen 4 zwischen der ersten Elektronikbaugruppe 2 und der zweiten Elektronikbaugruppe 3 ist mit jeweils einem auf der ersten Elektronikbaugruppe 2 und der zweiten Elektronikbaugruppe 3 plazierten Dual-Port-RAM-Baustein 6 verbunden. Diese beiden Dual-Port-RAM-Bausteine 6, die flüchtige Speicherbausteine mit jeweils einen Daten-Eingang für die erste Elektronikbaugruppe 2 und die zweite Elektronikbaugruppe 3 darstellen, werden jeweils von der ersten Elektronikbaugruppe 2 und von der zweiten Elektronikbaugruppe 3 im Rahmen eines Datenverkehrs zwischen der ersten und zweiten Elektronikbaugruppe 2 und 3 beschrieben bzw. ausgelesen.

Die erste Elektronikbaugruppe 2 ist mit der Peripherie, die unterschiedlichste Peripherie-Komponenten, -Geräte und
- Systeme enthalten kann, über die Peripherie-Schnittstellenbausteine 7 verbunden. Zu den Peripherie-Schnittstellenbausteinen 7 der ersten Elektronikbaugruppe 2 gehören im Ausführungsbeispiel folgende Schnittstellen:
   - eine Busschnittstelle 9 für den CAN-Bus (Controller Area Network Bus)
   - eine Busschnittstelle 10 für einen Audiodaten-Bus, beispielsweise den Inter-IC-Sound-Bus (I2S-Bus)
   - eine Softwareschnittstelle 11 zur Diagnose und Software-Aktualisierung über einen seriellen asynchronen Bus (universal ascynchronous receiver transmitter (UART))
   - eine Busschnittstelle 12 für eine Verbindung zu einer Mobilfunk-Antenne nach dem GSM-/GPRS-Kommunikationsstandard über einen seriellen asynchronen Bus (universal ascynchronous receiver transmitter (UART))
   - eine Busschnittstelle 13 für eine Verbindung zu einer mit dem satellitengestützten globalen Ortungssystem (GPS) verbundenen Antenne über einen seriellen asynchronen Bus (universal ascynchronous receiver transmitter (UART))
   - eine Busschnittstelle 14 für eine Verbindung zu peripheren Bedienelementen und einfachen Anzeigeeinrichtungen über einen seriellen asynchronen Bus (universal ascynchronous receiver transmitter (UART))
   - eine Schnittstelle 15 für eine Teilnehmer-Identifizierungskarte (subscriber identification module (SIM)) für einen berechtigten Zugang des modularen und skalierbaren Systems als Teilnehmer an das Mobilfunknetz (GSM-/GPRS-Netz)
   - eine Schnittstelle 16 nach dem Bluetooth-Standard zur funkgestützten Datenübertragung zu elektronischen Geräten (Tastatur, Maus, tragbare Rechner) im Nahbereich
   - eine analoge Verbindungsschnittstelle 17 (Audio Out) zur Ansteuerung von Lautsprechern
   - eine analoge Verbindungsschnittstelle 18 (Audio In) zur Radioantenne
   - eine analoge Schnittstelle 19 zum Anschluß einer Fahrzeug-Bordspannung
   - ein Dual-Port-RAM-Baustein 6 zum Datenaustausch mit der zweiten Elektronikbaugruppe 3

Die erste Elektronikbaugruppe 2 weist zusätzlich eine analoge Schnittstelle 20 auf, die über die Stromverbindung 5 mit der zweiten Elektronikbaugruppe 3 zur Versorgung der zweiten Elektronikbaugruppe 3 mit stabilisierten Spannungen verschiedener Spannungspegel verbunden ist.

Die zweite Elektronikbaugruppe 3 ist mit der Peripherie über die Peripherie-Schnittstellenbausteine 8 verbunden. Zu den Peripherie-Schnittstellenbausteinen 8 der zweiten Elektronikbaugruppe 3 gehören folgende Schnittstellen:
- ein Dual-Port-RAM-Baustein 6 zum Datenaustausch mit der ersten Elektronikbaugruppe 2
- eine Softwareschnittstelle 21 zur Diagnose und Software-Aktualisierung über einen seriellen asynchronen Bus (universal asynchronous receiver transmitter (UART))
- eine Busschnittstelle 22 für eine Verbindung zu einer Mobilfunk-Antenne nach dem GSM-/GPRS-Kommunikationsstandard über einen seriellen asynchronen Bus (universal asynchronous receiver transmitter (UART))
- eine Busschnittstelle 23 für eine Verbindung zu einer mit dem satellitengestützten globalen Ortungssystem (GPS) verbundenen Antenne über einen seriellen asynchronen Bus (universal asynchronous receiver transmitter (UART))
- eine standardisierte Schnittstelle 24 (nach ATAPI-Standard (AT Atachment Packet Interface)) für die Anbindung unterschiedlichster Massenspeicher (CD-ROM, DVD, Festplatte) an einen einheitlichen Massenspeicher-Ansteuerungsbaustein
- eine Busschnittstelle 25 für eine Hochgeschwindigkeitsbus (nach der LVDS-Technologie (low voltage differential signal technology)) zum Datentransfer zu einem schnellen nichtflüchtigen Speicher-Modul (flasch-Speicher)
- eine Laufwerksschnittstelle 26 für eine Speicherkarte mit hohem Sicherheitsstandard (secure digital Karte)
- eine Schnittstelle 27 zum Anschluß einer Tastatur und/oder einer Maus nach dem PS/2-Standard
- eine Schnittstelle 28 zum Anschluß eines hochauflösenden Vollgrafikbildschirms
- eine Busschnittstelle 29 für den optoelektronischen MOST-Bus (Media Oriented System Transport Bus)
- eine Netzschnittstelle 30 nach dem Ethernet-Standard zum Anschluß an ein lokales Netzwerk (LAN)
- eine erste Erweiterungsschnittstelle 31 für eine Verbindung zu einer ersten Erweiterungs-Elektronikbaugruppe 32
- eine zweite Erweiterungsschnittstelle 33 für eine Verbindung zu seiner zweiten Erweiterungs-Elektronikbaugruppe 34

Die zweite Elektronikbaugruppe 3 weist zusätzlich eine analoge Schnittstelle 20 auf, die über die Stromverbindung 5 mit der ersten Elektronikbaugruppe 2 zur Versorgung der zweiten Elektronikbaugruppe 3 mit stabilisierten Spannungen verschiedener Spannungspegel verbunden ist. Über eine analoge Schnittstelle 35 nach dem ATAPI-Standard werden die Massenspeicherlaufwerke CD-ROM, DVD und Festplatte mit stabilisierten Spannungen verschiedener Spannungspegel versorgt.

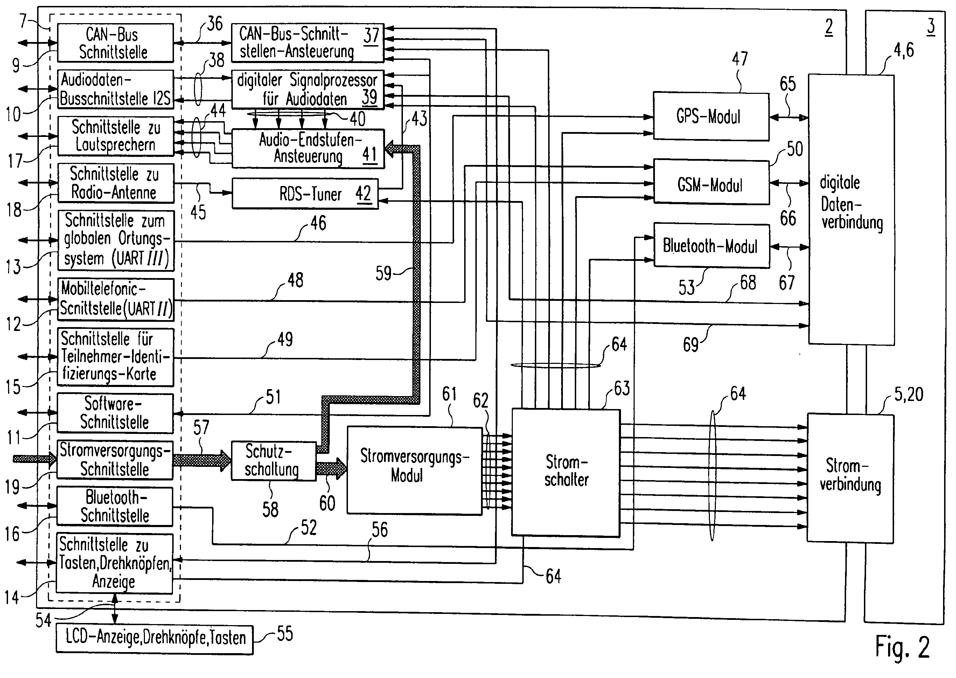

Gemäß Fig. 2 ist die CAN-Bus-Schnittstelle 9 über die Verbindungsleitung 36 mit einem CAN-Busschnittstellen-Ansteuerbaustein 37 verbunden. Dieser CAN-Busschnittstellen-Ansteuerbaustein 36 steuert und überwacht den gesamten Datenverkehr zwischen der ersten Elektronikbaugruppe 2 und dem CAN-Bus mit typischerweise folgenden Funktionen:
- Steuerung und Überwachung des gesamten Sendeund Empfangsbetriebs (handshaking)
- Protokollaufbau (framing)
- Fehlerbehandlung (error handling)
- Fehlerberichterstattung (error reporting)
- Protokollsynchronisierung (frame synchronizing)

Daneben führt der CAN-Busschnittstellen-Ansteuerbaustein 36 aufgrund seines integrierten Mikroprozessors auch noch folgende nicht CAN-spezifischen Funktionen aus:
- Ansteuerung des Bedien-/Anzeige-Moduls 55
- Ansteuerung der Leistungsschalter im Stromschalter 63 (Leistungssteuerung)
- Navigations-und Telematikfunktionen
- Softwarediagnose und Softwareaktualisierung

Die Audiodaten-Busschnittstelle 10 ist über die Busverbindungen 38 mit dem digitalen Signalprozessor 39 für Audiodaten verbunden. Außerdem ist er mit den Audio-Endstufen 41 über die Busverbindung 40 zur Übertragung der Ansteuersignale und mit dem RDS-Tuner 42 über die Verbindungsleitung 43 zum Empfang des demodulierten Empfangssignals verbunden. Der digitale Signalprozessor 39 führt das wesentliche Audiodaten-Management durch. Hierzu gehören vor allem folgende Funktionen:
- Demodulation des RDS-Signals (digitale senderspezifische Zusatzdaten wie z.B. Senderbezeichnung, Kurznachricht oder Sendefrequenzen zur Nachführung des Empfängers an die optimale Sendefrequenz)
- Absorption von auftretenden Interferenzen im Empfangssignal
- Rauschunterdrückung des Empfangssignals (nach Dolby-Standard)
- Signalbehandlung von schwach empfangenen Signalen
- Basisband-Signalverarbeitung (Verstellung der Lautstärke, der Höhen, der Tiefen, der Balance des Stereotons usw.)
- Signaldekodierung und -verarbeitung zu Stereo-, Surround- und anderen Klang-Effekten
- Generierung der Ansteuersignalen für die Audio-Endstufen
- MP3-Kompression und -Dekompression

Die Audio-Endstufen 41 erzeugen aus den vom digitalen Signalprozessor 39 für Audiosignale über die Busverbindung 40 erhaltenen Ansteuersignale die für die jeweils angeschlossenen Lautsprecher(-paare) erforderlichen Leistungssignale, die über den Leistungsbus 44 an die Schnittstelle 17 zu den Lautsprechern übertragen werden.

Der 'RDS-Tuner 42 empfängt über die Verbindungsleitung 45 von der Schnittstelle 18 zur Radio-Antenne das Empfangssignal und führt im wesentlichen eine Demodulation des amplituden- oder frequenzmodulierten Multiplexsignals durch und führt das demodulierte Signal über die Verbindungsleitung 43 dem digitalen Signalprozessor 39 für Audiodaten zu.

Die Schnittstelle 13 zum globalen Ordnungssystem (GPS) ist über die Verbindungsleitung 46 mit dem GPS-Modul 47 verbunden. Das GPS-Modul 47 empfängt über die Schnittstelle 13 von einem GPS-Satelliten die aktuellen geografischen Positionsdaten des Fahrzeugs in Echtzeit und führt im wesentlichen folgende Funktionen durch:
- Dekodierung der GPS-Daten zur exakten Bestimmung der aktuellen Position in Echtzeit
- Ermittelung der aktuellen Bewegungsrichtung aus mehreren zurückliegenden GPS-Daten in Echtzeit
- optionale Recherche und Abfrage nach zusätzlicher Standortinformationen zur aktuellen Position
- Durchführung einer Routenplanung auf der Basis von abgespeicherten Stadt- und Landkarten

Zusätzlich zu den charakteristischen GPS-Funktionen werden im GPS-Modul folgende GPS-fremden Funktionen zusätzlich ausgeführt:
- Funktionen der Sprachein- und -ausgabe
- Audiodatenkompression und -Dekompression nach dem MP3-Standard
- Videodatenkompression und -Dekompression nach dem MPEG-Standard

Die Mobiltelefonie-Schnittstelle 12 ist über die Verbindungsleitung 48 mit dem GSM-Modul 50 verbunden. Für einen berechtigten Zugriff des modularen und skalierbaren Systems 1 über das GSM-Modul 50 an das Mobilfunknetz nach GSM-Standard ist eine Teilnehmernidentifizierung des modularen und skalierbaren Systems 1 über eine Teilnehmer-Identifizierung-Karte (SIM = subscriber identification module) nötig. Hierzu wird an das GSM-Modul 50 über eine Verbindungsleitung 49 und eine Schnittstelle 15 für die Teilnehmer-Identifizierungs-Karte ein Laufwerk für eine SIM-Karte angeschlossen, um auf diesem Wege die korrekte Teilnehmer-Identifizierung am GSM-Netz zu verwirklichen. Die wesentlichen Funktionen des GSM-Moduls sind folgende:
- Authentifizierung des Teilnehmers mittels Code der SIM-Karte
- Modulation bzw. Demodulation im Zeit-Multiplex-Verfahren
- Kanalkodierung bzw. -Dekodierung mit fehlerkorrigierendem Code (FEC, CRC) und Verschachtelungskodierung (Interleaving)
- Sprachkodierung
- Entwicklung von verschiedenen Diensten (z.B. GPRS: Internetzugriff; SMS: Kurznachrichten usw.)

Die Softwareschnittstelle 11 ist zu Diagnose- und Softwareaktualisierungzwecken über die Verbindungsleitung 51 mit dem digitalen Signalprozessor 39 und der CAN-Bus-Schnittstellen-Ansteuerung 37 verbunden.

Die Bluetooth-Schnittstelle 16 ist über die Verbindungsleitung 52 mit dem Bluetooth-Modul 53 verbunden. Das Bluetooth-Modul 53 ist auf dem Funk-Übertragungsweg mit Peripheriegeräten wie Tastatur, Maus, Joystick und Laptop, die sich in unmittelbarer Nähe des modularen und skalierbaren Systems 1 befinden, zum Datenaustausch verbunden. Der Funktionsumfang des Bluetooth-Moduls 53 ähnelt aufgrund der gleichen Datenübertragungsstrecke dem Funktionsumfang des GSM-Moduls 50.

Die Schnittstelle 14 zu den Tasten, Drehknöpfen und Anzeigen ist über eine Verbindung 54 mit dem Bedien-/Anzeige-Modul 55, bestehend aus LCD-Anzeige, Drehknöpfen und Tasten, verbunden. Die entsprechenden Ansteuersignale für die LCD-Anzeige und die entsprechenden Statussignale der Drehknöpfe und Tasten werden über die Verbindungsleitung 56 zwischen der Schnittstelle 14 zu den Tasten, Drehknöpfen und Anzeigen und der CAN-Bus-Schnittstelle-Ansteuerung 37 ausgetauscht, deren Mikroprozessor die Ansteuerung und Überwachung des Bedien-/Anzeige-Moduls 55 übernimmt.

Die Stromversorgungsschnittstelle 19, die von der Fahrzeug-Bordspannung mit Spannung versorgt wird, ist über eine Verbindungsleitung 57 mit der Schutzschaltung 58 verbunden, in der ein Überspannungsschutz und eine Strombegrenzung vorgesehenen ist. Die begrenzte Ausgangsspannung der Schutzschaltung 58 wird über die Leistungsverbindung 59 der Audio-Endstufen-Ansteuerung 41 zur Erzeugung von Leistungssignalen für die eingesetzten Lautsprecher und über die Leistungsverbindung 60 dem Stromversorgung-Modul 61 zugeführt. Im Stromversorgungs-Modul 61 erfolgt die Erzeugung mehrerer Einzelspannungen unterschiedlicher Spannungspegel aus der Fahrzeug-Bordspannung. Diese Einzelspannungen werden über die Leistungsverbindung 62 dem Stromschalter 63 zugeführt, in dem diese über Leistungsschalter den einzelnen aktiven Elektronikkomponenten des modularen und skalierbaren Systems 1 in zeitlicher Reihenfolge zugeschaltet werden. Über die Spannungsleitungen 64 werden die einzelnen aktiven Elektronikkomponenten der ersten Elektronikbaugruppe 2, der zweiten Elektronikbaugruppe 3 und des Bedien-/Anzeige-Moduls 55 mit den jeweiligen Einzelspannungen vom Stromschalter 63 versorgt.

Der Dual-Port-RAM-Baustein 6, der über die digitale Datenverbindungsleitung 4 mit der zweiten Elektronikbaugruppe 3 verbunden ist, ist über die Verbindungsleitung 65 mit dem GPS-Modul 47, über die Verbindungsleitung 66 mit dem GSM-Modul 50, über die Verbindungsleitung 67 mit dem Bluetooth-Modul 53, über die Verbindungsleitung 68 mit dem digitalen Signalprozessor 39 und über die Verbindungsleitung 69 mit der CAN-Bus-Schnittstellen-Ansteuerung 37 verbunden. Die analoge Schnittstelle 20, die über die Stromverbindung 5 mit der zweiten Elektronikbaugruppe 3 verbunden ist, wird von den Spannungsleitungen 64 versorgt.

Auf der zweiten Elektronikbaugruppe 3 ist die Hochgeschwindigkeitsschnittstelle 25 (nach LVDS-Technologie) über die Verbindungsleitung 70 mit dem Empfänger für den Hochgeschwindigkeit-Bus 71 verbunden. Dieser Empfänger 71 für den Hochgeschwindigkeit-Bus führt im wesentlichen eine Wandlung des Spannungspegels des Hochgeschwindigkeitsbusses zu Standardtechnologie-Spannungspegeln (CMOS,TTL) durch. Über die Verbindungsleitung 81 ist der Empfänger 71 für den Hochgeschwindigkeits-Bus mit dem programmierbaren Logikbaustein (FPGA) 75 verbunden.

Die MOST-Busschnittstelle 29 ist über die Verbindungsleitung 72 mit der MOST-Bus-Schnittstellen-Ansteuerung 73 verbunden. Während in der MOST-Busschnittstelle 29 die Umsetzung des elektrischen Signals der Verbindungsleitung 27 auf das optische Signal der Glasfaserleitung des optischen MOST-Busses erfolgt, führt die MOST-Bus-Schnittstellen-Ansteuerung 73 die hardwarenahen Funktionen des Sendens und Empfangens von Datenströmen und Datenpaketen im synchronen und asynchronen Datenübertragungs-Modus des MOST-Busses durch. Um über die MOST-Bus-Schnittstellen-Ansteuerung 73 sowohl asynchrone Datenströme wie auch synchrone Datenpakete versenden und empfangen zu können, wird die MOST-Bus-Schnittstellen-Ansteuerung 73 über die Verbindungsleitung 74 mit dem programmierbaren Logikbaustein (FPGA) 75 verbunden, in dem in Hardware entsprechende Datenpuffer für die Datenströme und für die Datenpakete im Sende- und Empfangs-Modus entsprechende Schnittstellen zum FPGA-internen Datenbus und zur MOST-Bus-Schnittstellen-Ansteuerung 73 und geeignete Steuerungsstrukturen implementiert sind.

Die Schnittstelle 30 für das lokales Netzwerk (LAN) ist über eine Verbindungsleitung 76 mit der Netzwerk-Ansteuerung 77 verbunden. Die Netzwerk-Ansteuerung 77 steuert und überwacht die Schnittstelle 30 für das lokale Netzwerke (LAN) nach dem Ethernet-Standard und führt eine Umwandlung der zu sendenden bzw. zu empfangenden Daten in die entsprechenden Datenformate unter Zwischenspeicherung der Daten in entsprechenden Datenpuffern durch. Die Netzwerk-Ansteuerung 77 ist mit dem lokalen Bus 78 der zweiten Elektronikbaugruppe 3 verbunden.

Die Schnittstelle für Vollgrafikbildschirme 28 ist über die Verbindungsleitung 79 mit der Grafik-Ansteuerung 80 verbunden. Die Grafik-Ansteuerung 80 wandelt die darzustellenden Bilddaten, die sie über den lokalen Bus 78 von den informationsverarbeitenden Einheiten erhält, in das für den hochauflösenden Vollgrafik-Bildschirm geeignete Bilddatenformat um.

Der programmierbare Logikbaustein 75 ist mit der Schnittstelle 26 für Hochsicherheits-Speicherkarten über die Verbindungsleitung 82, mit der Schnittstelle 27 nach dem PS/2-Standard für Tastatur und Maus über die Verbindungsleitung 83, mit der Universalschnittstelle 24 nach dem ATAPI-Standard für CD, DVD und Festplatte über die Verbindungsleitung 85, mit der ersten Erweiterungsschnittstelle 31 über die Verbindungsleitung 86, mit der zweiten Erweiterungsschnittstelle 33 über die Verbindungsleitung 87, mit der Schnittstelle 23 zum globalen Ortungssystem über die Verbindungsleitung 88 und mit der Mobiltelefonieschnittstelle 22 über die Verbindungsleitung 89 verbunden.

Die Softwareschnittstelle 21 ist über die Verbindungsleitung 84 mit dem programmierbaren Logikbaustein nach FPGA-Technologie 75, mit dem Mikroprozessor 90 und mit dem programmierbaren Logikbaustein nach CPLD-Technologie 96 zur Softwarediagnose und Softwareaktualisierung verbunden.

Der programmierbare Logikbaustein 75 (FPGA) führt im wesentlichen Schnittstellenfunktionen zwischen dem lokalen Bus 78 der zweiten Elektronikbaugruppe 3 und den Peripherie-Schnittstellen-Bausteinen 8 sowie deren Ansteuer-Bausteinen 71, 73, 77 und 80 durch. Über den lokalen Bus 78 ist der programmierbare Logikbaustein 75 mit dem Mikroprozessor 90, einem flüchtigen Speicherbaustein (RAM) 91, einem nicht flüchtigen Speicherbaustein (ROM) 92 und einem schnellen nicht flüchtigen Speicherbaustein (Flash) 93 verbunden.

Auf dem Mikroprozessor 90, der durch eine hohe Rechenleistung gekennzeichnet ist, ist auf der Basis eines Echtzeit-Betriebssystems die Anwendungssoftware implementiert, die folgende Aufgaben wahrnimmt:
- Realisierung einer Anwendungsumgebung zur Implementierung von kundenspezifischer Software
- Grafikfunktionen - Grafikschnittstelle - für die Darstellung unterschiedlichster Informationen (z. B. Zustandsdaten aus dem Motor-Management, Navigationsdaten, Daten des Audio- und Videosystems usw.) auf Vollgrafikbildschirmen im Cockpit bzw. im Bereich der Rücksitze
- Spracherkennungs- und -synthesefunktionen
- höherwertige Signalverarbeitungsfunktionen (z.B. MPEG-Kodierung/Dekodierung von Videodaten, MP3-Kodierung/ Dekodierung von Audiodaten, Audiodatenmanagement)
- Softwarediagnose und Softwareaktualisierung
- Navigationsfunktionen und andere Fahrerinformationsfunktionen
- Internetnahe Anwendungsfunktionen

Die im Rahmen dieser Aufgaben erzeugten Daten werden vom programmierbaren Logikbaustein 75 und Mikroprozessor 90 über den lokalen Bus 78 in den flüchtigen Speichern (RAM) 91 gespeichert. Festwertdaten (z.B. Parameter, Konstanten) werden über den lokalen Bus 78 aus dem nicht flüchtigen Speicher (ROM) 92 abgerufen. Die Konfigurationsdaten für den programmierbaren Logikbaustein (FPGA) 75 werden im schnellen nicht flüchtigen Speicher (Flash-Speicher) 93 und die System- und Anwendungssoftware des Mikroprozessors 91 wird im elektrisch löschbaren nicht flüchtigen Speicher (EEPROM) 94 gehalten. Während der Initialisierung des modularen und skalierbaren Systems 1 werden die Konfigurationsdaten aus dem Flash-Speicher 93 dem programmierbaren Logikbaustein nach FPGA-Technologie 75 über die Verbindungsleitung 95 mittels Steuerung durch einen programmierbaren Logikbaustein 96 nach CPLD-Technologie zugeführt.

Zur Taktung der informationsverarbeitenden Einheiten - programmierbarer Logikbaustein nach FPGA-Technologie 75, Mikroprozessor 90, programmierbarer Logikbaustein nach CPLD-Technologie 96 auf der zweiten Elektronikbaugruppe 3, CAN-Bus-Schnittstellen-Ansteuerung 37 und digitaler Signalprozessor 39 auf der ersten Elektronikbaugruppe 2 - dient ein Echtzeituhr-Baustein 97. Dieser ist über die Verbindungsleitungen 98 mit den entsprechenden elektronischen Bausteinen 75, 90 und 96 der zweiten Elektronikbaugruppe 3 und den entsprechenden elektronischen Bausteinen 37 und 39 der ersten Elektronikbaugruppe 2 über das Dual-Port-RAM 6 und über die digitale Datenverbindung 4 verbunden ist.

Das Dual-Port-RAM 6, das über die digitale Datenverbindung 4 mit der ersten Elektronikbaugruppe 2 verbunden ist, ist daneben über den Datenbus 99 mit dem programmierbaren Logikbaustein nach FPGA-Technologie 75 und über den Datenbus 100 mit dem Mikroprozessor 90 zum Datenaustausch mit der ersten Elektronikbaugruppe 2 verbunden.

Die Stromverbindung 4 von der ersten Elektronikbaugruppe 2 ist über die Stromschnittstelle 20 und die Stromleitungen 101 mit Stromverbindungsschnittstelle 35 zur ATAPI-Schnittstelle und mit allen aktiven elektronischen Bausteinen 71, 73, 75, 77, 80, 91, 92, 93 und 94 der zweiten Elektronikbaugruppe 3 zur stabilisierten Spannungsversorgung verbunden.

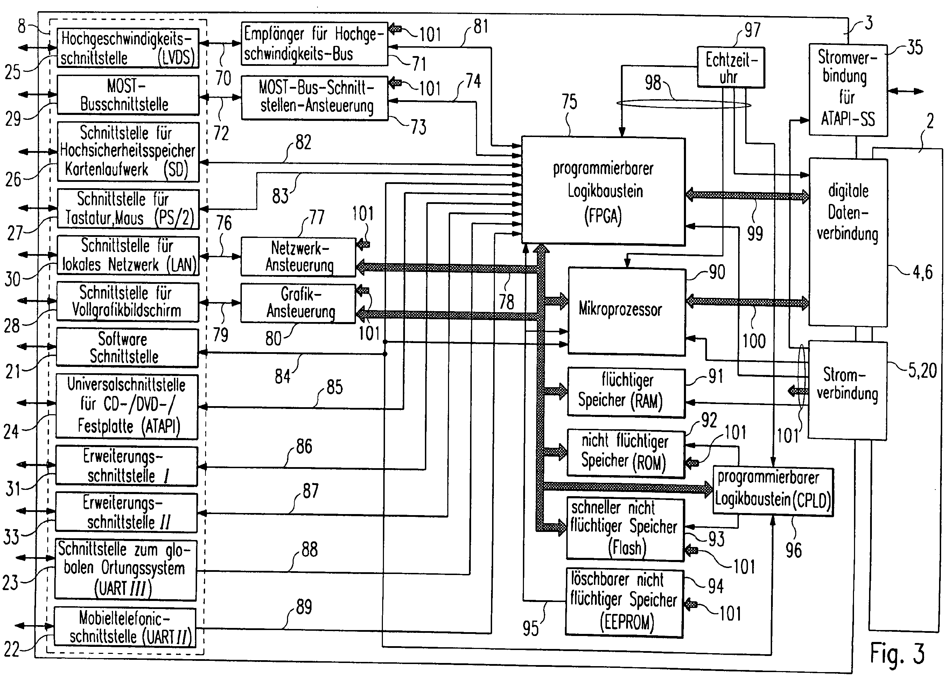

Um die Übersichtlichkeit in den Fig. 2 und 3 der Zeichnung nicht zu gefährden, wurde die Darstellung sämtlicher Ansteuer- und Verbindungsleitungen auf die obige beschriebenen Leitungen beschränkt.

Aus der obigen Beschreibung geht hervor, daß auf der ersten Elektronikbaugruppe 2 alle diejenigen Funktionen realisiert sind, die einen gewissen minimalen Standardumfang für multimediale Komfortfunktionen darstellen und die von ihrer Echtzeitverarbeitung hohe Echtzeitanforderungen aufweisen. Zu diesen Funktionen zählen:
- die Ansteuerung einer einfachen Anzeige, beispielsweise einer LCD-Anzeige
- die Überwachung von Bedienvorrichtungen wie Tasten und Drehknöpfe
- die Überwachung und Steuerung der einzelnen stabilisierten Spannungsversorgungen
- der Rundfunkempfang mit RDS-Tuner
- Audiodatenmanagementfunktionen für den Standardumfang
- die Ansteuerung von Audio-Leistungsendstufen
- die Ansteuerung und Überwachung von Nebenbetrieben im Fahrzeug (z.B. Scheibenwischer, Fensterheber) über den CAN-Bus
- Telematikdienste (Ortung mittels GPS, Mobiltelefonie über GSM-Netz)
- Anschlußmöglichkeit an Fahrzeug-Bordspannung

Auf der zweiten Elektronikbaugruppe 3 sind dagegen alle diejenigen Funktionen implementiert, die höherwertige, aber nicht zwingend erforderliche multimediale Komfortfunktionen darstellen und von ihrer Echtzeitverarbeitung eher geringere Echtzeitanforderungen an die Rechnerleistung stellen. Zu diesen Funktionen zählen:
- Ansteuerung eines hochauflösenden Vollgrafikbildschirms
- Internetzugriff über GSM-Netz und Durchführung von internetnahen Anwendungen
- Spracherkennung und -synthese
- Ansteuerung und Überwachung von Nebenbetrieben im Fahrzeug über den optoelektronischen MOST-Bus
- Navigation und Fahrerinformationssystem
- höherwertige Signalverarbeitung im Audio- und Videobereich (MP3- und MPEG-Kompression und -Dekompression)
- Anschlußmöglichkeit von CD, DVD, Festplatte und Hochsicherheitsspeicherkarte (SD-Karte)
- Anschlußmöglichkeit von Tastatur, Maus, Joystick und Laptop
- Anschlußmöglichkeit an lokales Netzwerk (LAN) zur Softwarediagnose und -aktualisierung
- Anschlußmöglichkeit an Erweiterungs-Elektronikbaugruppen

Die Aufrechterhaltung einer Redundanz zumindest hinsichtlich der wichtigen Funktionen der Ausfall einer der beiden Elektronikbaugruppen 2 und 3 ist gewährleistet. Bei Ausfall der zweiten Elektronikbaugruppe 3 werden die wichtigen Funktionen des modularen und skalierbaren Systems 1 von der ersten Elektronikbaugruppe 2 aufgrund der Tatsache übernommen, daß die zweite Elektronikbaugruppe 3 aufgrund der Systemarchitektur nur höherwertige und nicht zwingend erforderliche Komfortfunktionen ausführt.

Bei Ausfall der ersten Elektronikbaugruppe 2 kann die Spannungsversorgung über die Stromschnittstelle 20 von der Fahrzeug-Bordspannung abgezweigt werden und über die Stromverbindung 5 der Audio-Endstufen-Ansteuerung 41 auf der ersten Elektronikbaugruppe 2 zugeführt werden. Die Überwachung der Tasten und Drehknöpfe über die Schnittstelle 14 und die Ansteuerung der Lautsprecher über die Schnittstelle 17 auf der ersten Elektronikbaugruppe 2 kann auch durch den Mikroprozessor 90 bzw. den programmierbaren Logikbaustein 75 der zweiten Elektronikbaugruppe 3 auf dem Weg über die digitale Datenverbindung 4 erfolgen. Die Telematikdienste (Ortung und Mobiltelefonie) sind über die Schnittstellen 22 und 23, den programmierbaren Logikbaustein 75 und den Mikroprozessor 90 der zweiten Elektronikbaugruppe 3 realisiert. Somit ist bei Ausfall der ersten Elektronikbaugruppe 2 ein Notbetrieb durch die zweite Elektronikbaugruppe 3 möglich.

## Patentansprüche

1. Modulares und skalierbares System (1) zur Ausführung von Unterhaltungs-, Telekommunikations-, Steuerungs- und Überwachungsfunktionen für Fahrzeuge bestehend aus Standardelektronikbausteinen (6, 9, 10, 11, 12, 13, 14, 15, 16, 17, 18, 19, 21, 22, 23, 24, 25, 26, 27, 28, 29, 30, 31, 33, 35, 37, 39, 41, 47, 50, 53, 58, 61, 63, 71, 73, 77, 80, 90, 91, 92, 93, 94, 97) und anwendungsspezifischen Elektronikbausteinen (75, 96) zur Informationsverarbeitung und -speicherung sowie zur Datenkommunikation,
**dadurch gekennzeichnet,**
**daß** die Komfort-, Steuerungs- und Überwachungsfunktionen mit hohen Echtzeitanforderungen auf einer ersten Elektronikbaugruppe (2) und die Unterhaltungs-, Telekommunikations-, Steuerungs- und Überwachungsfunktionen mit geringeren Echtzeitanforderungen auf einer zweiten Elektronikbaugruppe (3) ausgeführt sind.

2. Modulares und skalierbares System nach Anspruch 1,
**dadurch gekennzeichnet,**
**daß** bei Ausfall der ersten Elektronikbaugruppe (2) die wichtigen Unterhaltungs-, Telekommunikations-, Steuerungsund Überwachungsfunktionen der ersten Elektronikbaugruppe (2) zusätzlich auf der zweiten Elektronikbaugruppe (3) und bei Ausfall der zweiten Elektronikbaugruppe (3) die wichtigen Unterhaltungs-, Telekommunikations-, Steuerungsund Überwachungsfunktionen zusätzlich auf der zweiten Elektronikaugruppe (3) ausgeführt sind.

3. Modulares und skalierbares System nach den Ansprüchen 1 oder 2,
**dadurch gekennzeichnet,**
**daß** die erste und zweite Elektronikbaugruppe (2, 3) über eine gemeinsame digitale Datenverbindung (4) zum Datenaustausch und eine gemeinsame Stromverbindung (5) zur Versorgung der ersten und zweiten Elektronikbaugruppe (2, 3) mit einer Fahrzeug-Bordspannung über eine gemeinsame Stromversorgungsschnittstelle (19) miteinander verbunden sind.

4. Modulares und skalierbares System nach Anspruch 3,
**dadurch gekennzeichnet,**
**daß** sich die erste und zweite Elektronikbaugruppe (2, 3) hinsichtlich eines Ausfalls der jeweils anderen Elektronikbaugruppe (3, 2) über die gemeinsame digitale Datenverbindung (4) gegenseitig überwachen.

5. Modulares und skalierbares System nach Anspruch 3 oder 4,
**dadurch gekennzeichnet,**
**daß** die erste und zweite Elektronikbaugruppe (2, 3) je nach Kundenwunsch einen aus einem Maximalumfang an Standard-Peripheriebausteinen (7, 8) ausgewählten individuellen Umfang an Standardperipheriebausteinen (9 und/oder 10 und/oder 11 und/oder 12 und/oder 13 und/oder 14 und/oder 15 und/oder 16 und/oder 17 und/oder 18 und/oder 19 und/oder 21 und/oder 22 und/oder 23 und/oder 24 und/oder 25 und/oder 26 und/oder 27 und/oder 28 und/oder 29 und/oder 30 und/oder 31 und/oder 33) zum Anschluß von entsprechenden Standardperipherie-Geräten, -Komponenten und -Systemen enthält.

6. Modulares und skalierbares System nach Anspruch 5,
**dadurch gekennzeichnet,**
**daß** die Integration der kundenindividuell ausgewählten Standardperipheriebausteine (9 und/oder 10 und/oder 11 und/oder 12 und/oder 13 und/oder 14 und/oder 15 und/oder 16 und/oder 17 und/oder 18 und/oder 19 und/oder 21 und/oder 22 und/oder 23 und/oder 24 und/oder 25 und/oder 26 und/oder 27 und/oder 28 und/oder 29 und/oder 30 und/oder 31 und/oder 33) in das modulare und skalierbare System (1) durch die Konfiguration eines programmierbaren Logik-Bausteins (75) festgelegt ist.

7. Modulares und skalierbares System nach Anspruch 6,
**dadurch gekennzeichnet,**
**daß** über einen ansteuerbaren Stromschalter (63) in Abhängigkeit der kundenindividuell ausgewählten Standardperipheriebausteine (9 und/oder 10 und/oder 11 und/oder 12 und/oder 13 und/oder 14 und/oder 15 und/oder 16 und/oder 17 und/oder 18 und/oder 19 und/oder 21 und/oder 22 und/oder 23 und/oder 24 und/oder 25 und/oder 26 und/oder 27 und/oder 28 und/oder 29 und/oder 30 und/oder 31 und/oder 33) die jeweils benötigten stabilisierten Spannungsversorgungen an die implementierten Standardelektronikbausteine (35, 37, 39, 41, 42, 47, 50, 53, 55, 71, 73, 75, 77, 80, 90, 91, 92, 93, 94) frei geschaltet sind.

8. Modulares und skalierbares System nach Anspruch 7,
**dadurch gekennzeichnet,**
**daß** der Umfang der auf der ersten und zweiten Elektronikbaugruppe (2, 3) in den einzelnen Standardelektronikbausteinen (6, 9, 10, 11, 12, 13, 14, 15, 16, 17, 18, 19, 21, 22, 23, 24, 25, 26, 27, 28, 29, 30, 31, 33, 35, 37, 39, 41, 47, 50, 53, 58, 61, 63, 71, 73, 77, 80, 90, 91, 92, 93, 94, 97) und anwendungsspezifischen Elektronikbausteinen (75, 96) durchzuführenden Unterhaltungs-, Telekommunikations-, Steuerungs- und Überwachungsfunktionen durch eine Anwendungssoftware eines Mikroprozessor, der in einer CAN-Bus-Schnittstellen-Ansteuerung (37) integriert ist, eines digitalen Signalprozessors (39) für Audiodaten und eines Mikroprozessor (90) und durch eine Konfigurations-Software zur Konfiguration der programmierbaren Logik-Bausteine (75, 96) festgelegt ist.

9. Modulares und skalierbares System nach einem der Ansprüche 1 bis 8,
**dadurch gekennzeichnet,**
**daß** die Unterhaltungs-, Telekommunikations-, Steuerungsund Überwachungsfunktionen mit hohen Echtzeitanforderungen Überwachung von Bedientasten (55) und Drehknöpfen (55), Ansteuerung von einfachen Anzeigen (55), Ansteuerung von Audio-Endstufen, Rundfunk-Empfang, Überwachung und Steuerung von einzelnen stabilisierten Spannungsversorgungen, Telematikdienste wie GPS-Empfang und Mobiltelefonie, Standardfunktionen des Audio-Managements, Ansteuerung und Überwachung von Nebenbetrieben im Fahrzeug über einen CAN-BUS, und Änderungsdienste am modularen und skalierbaren System (1) beinhalten.

10. Modulares und skalierbares System nach einem der Ansprüche 1 bis 9,
**dadurch gekennzeichnet,**
**daß** die Unterhaltungs-, Telekommunikations-, Steuerungsund Überwachungsfunktionen mit geringeren Echtzeitanforderungen Navigation und Fahrerinformation, Internetanbindung über Mobilfunknetz, TV-Empfang, Ansteuerung von hochauflösenden Vollgrafikbildschirmen, Ansteuerung und Überwachung von Nebenbetrieben im Fahrzeug über einen MOST-Bus, Spracherkennung und -synthese, höherwertige Funktionen des Audiodaten-Managements und Änderungsdienste am modularen und skalierbaren System (1) beinhalten.
